# EUROPÄISCHE PATENTSCHRIFT

(11) **EP 2 431 306 B1**
(45) Veröffentlichungstag und Bekanntmachung des Hinweises auf die Patenterteilung: **09.10.2013**
(21) Anmeldenummer: 11006566.1
(22) Anmeldetag: 10.08.2011
(51) Int. Cl.: B65G 19/02, B65G 19/30, B65G 25/10

(54) **Vorrichtung zum Fördern von Paletten**
Device for transporting pallets
Dispositif pour le transport de palettes

(30) Priorität: 21.09.2010 DE 102010046197
(43) Veröffentlichungstag der Anmeldung: 21.03.2012
(73) Patentinhaber: FAB GmbH Fördertechnik und Anlagenbau, 79761 Waldshut-Tiengen (DE)
(72) Erfinder: Müller, Anton, 79774 Albbruck (DE)
(74) Vertreter: Goy, Wolfgang

(56) Entgegenhaltungen:
- EP-A1- 0 111 945
- CH-A- 449 514
- DE-A1- 2 818 868
- DE-A1- 3 330 620
- FR-A1- 2 240 875
- GB-A- 1 519 683
- NL-A- 6 602 114
- US-A- 3 401 789

## Beschreibung

Die Erfindung betrifft eine Vorrichtung zum Fördern von Paletten längs einer Förderstrecke gemäß dem Oberbegriff des neuen Patentanspruchs 1.

Paletten dienen dazu, irgendwelche Gegenstände aufzunehmen. Diese Gegenstände können dabei vielfältigster Art sein. Um die Paletten von einem Ort zum anderen transportieren zu können, dienen Förderer. Diese Förderer können durch Rollenbahnen gebildet sein, wobei zur Schaffung einer größeren Anlagen mehrere Rollenbahnen miteinander verbunden sein können. Auf diesen Rollenbahnen liegen die Paletten verfahrbar auf. Um die Paletten zu verfahren, sind die Rollen angetrieben.

Die DE 28 18 868 A1 zeigt eine Fördervorrichtung für Werkstücke mit zwei zueinander parallelen Rollenbahnen der eingangs angegebenen Art. Das Grundprinzip des Transports der Werkstücke besteht darin, daß diese Werkstücke intermittierend vorwärtsbewegt werden. Darunter ist zu verstehen, daß es sich bei diesem Vorwärtstransport nicht um eine durchgängige Bewegung handelt, sondern daß die Werkstücke etappenweise Stück für Stück vorwärts bewegt werden. - Zum Transport der Werkstücke dienen Klinken. Dabei ist jedem diese vorbeschriebenen Wegstücke jeweils eine Klinke zugeordnet. Die Hin- und Herbewegung der Klinken erfolgt mittels einer Zylinder/Kolben-Einheit. Für die Hin- und Herbewegung der Klinken wird diese Zylinder/Kolben-Einheit entsprechend vor- und zurückbewegt. Darunter ist zu verstehen, daß die Klinken das jeweilige Werkstück ein Stück vorbewegen, anschließend wieder mittels der Zylinder/Kolben-Einheit zurückkehren und von dort aus ein neues, nachfolgendes Werkstück um eine gewisse Strecke vorwärtstransportieren. - Die Klinken können um eine horizontale Achse verschwenkt werden. In einer aufgerichteten Stellung, bei der sie mittels eines Magneten gehalten werden, erfolgt der Vorwärtstransport. Wird die Klinke mittels der Zylinder/Kolben-Einheit zurückbewegt, wird die Klinke zunächst von einem Tasthebel entriegelt, welcher durch das vorwärts transportierte Werkstück nach unten gedrückt worden ist. Dadurch wird die Klinke frei und kann beim Rückwärtsfahren mittels der Zylinder/Kolben-Einheit durch Anstoßen an dem entsprechenden Werkstück nach unten verschwenkt werden, so daß die Klinke unter dem nachfolgend zu transportierenden Werkstück hindurchtaucht. Nach diesem Hindurchtauchen stößt die Klinke an einem Stoßelement an und richtet die Klinke für den nächsten Transportvorgang wieder auf. Diese Stoßelemente sind an einer beweglichen Platte angeordnet, die auf Rollen in Förderrichtung der Werkstücke bewegbar ist. In dieser Position kann dann das nächste Werkstück vorwärts transportiert werden.

Die DE 30 37 634 A1 zeigt ein Regal zum Transport von Paletten. Hierzu sind zwei zueinander parallele Rollenbahnen vorgesehen, auf denen die Paletten verfahrbar sind. Zwischen diesen beiden Rollenbahnen befinden sich an einer Vorschubstange Mitnehmer. Diese Mitnehmer sind um eine horizontale Achse beidseitig verschwenkbar. Zum Fixieren der Mitnehmer in der senkrechten Förderposition dienen Anschläge. Diese werden durch Betätigen einer Kolbenstange sowie eines Hebels in eine Blockierstellung für den Mitnehmer übergeführt.

Der Erfindung liegt die **Aufgabe** zugrunde, eine Vorrichtung zum Fördern von Paletten längs einer Förderstrecke der eingangs angegebenen Art mit einer verbesserten Mitnehmereinrichtung zum Verfahren der Paletten auf der Rollenbahn zu schaffen.

Die technische **Lösung** ist gekennzeichnet durch die Merkmale des Anspruchs 1.

Die Grundidee der erfindungsgemäßen Fördervorrichtung für Paletten besteht darin, daß die Rollen der Rollenbahn antriebslos und damit frei drehbar sind. Die Rollenbahn dient somit nur zur Auflagerung der Paletten sowie zur Verringerung des Bewegungswiderstandes, wenn die Palette längs der Rollenbahn verfahren wird. Als eigentlicher Antrieb dient wenigstens ein separater Mitnehmer. Diese Mitnehmereinrichtung ist parallel zur Rollenbahn angeordnet und derart ausgestaltet, daß der Mitnehmer bei einer Vorwärtsbewegung die entsprechende Palette auf der Rollenbahn mitnimmt, d. h. entweder vor sich her schiebt oder hinter sich herzieht. Durch eine entsprechende Steuerung dieser Mitnehmereinrichtung können die Paletten gezielt längs der Rollenbahn vorwärts transportiert werden. Der Antrieb für den Mitnehmer läßt sich dabei technisch einfach realisieren.

Der Mitnehmer kann zwei unterschiedliche Stellungen einnehmen, nämlich eine Ineingriffsstellung mit der Palette und eine Außereingriffsstellung mit der Palette. Dies Ausbildung des Mitnehmers hat den Vorteil, daß dieser an den Paletten vorbei bewegt werden kann, ohne daß die Paletten dabei gefördert werden. Hierzu ist es lediglich erforderlich, den Mitnehmer in die Außereingriffsstellung zu bringen. Insbesondere ist es möglich, daß die Mitnehmereinrichtung mit ihrem Mitnehmer in der Außereingriffsstellung unterflurig unterhalb der Paletten verfahren werden kann. Dies schafft einen kompakten Antrieb ohne Platzverlust.

Bei dem Mitnehmer handelt es sich um einen verschwenkbaren Arm. Dieser ist vorzugsweise zwischen zwei Endstellungen um 90° verschwenkbar, nämlich in der einen Position in die Ineingriffsstellung mit der Palette und in der anderen Position in der Außereingriffsstellung mit der Palette. Die Drehachse des Mitnehmers ist dabei vorzugsweise horizontal. Dies bedeutet, daß der armförmige Mitnehmer nach unten und nach oben verschwenkt werden kann. Gleichermaßen ist es aber auch denkbar, daß die Drehachse des Mitnehmers in der Vertikalen liegt.

Das Grundprinzip, wie der in die Außereingriffsstellung verschwenkte Mitnehmer wieder in die Ineingriffsstellung übergeführt werden kann, besteht darin, daß die Rollenbahn einen Startpunkt besitzt, von dem aus die Paletten auf der Rollenbahn in eine bestimmte Richtung bewegt werden. Wenn der Mitnehmer auf diesen Startpunkt der Förderstrecke trifft, gelangt der Mitnehmer in den Wirkbereich eines Anschlags, welcher den Mitnehmer automatisch in die Ineingriffsstellung überführt. Insbesondere wird dabei der Mitnehmer um eine Drehachse verschwenkt.

Gemäß einer bevorzugten Weiterbildung in Anspruch 2 sind zwei zueinander parallele Rollenbahnen vorgesehen. Zwischen diesen beiden Rollenbahnen ist die Mitnehmereinrichtung längsverfahrbar angeordnet. Dies bedeutet, daß die Paletten in ihren beiden Seitenbereichen auf den Rollen der Rollenbahn aufliegen, während in der Mitte sich die Mitnehmereinrichtung mit dem Mitnehmer befindet. Diese symmetrische Ausgestaltung der Fördereinrichtung hat vor allem den Vorteil, daß symmetrische Verhältnisse geschaffen sind. Dies bedeutet, daß der Mitnehmer im Bereich der Mittellängsachse an der Palette angreift. Es ist aber auch gleichermaßen denkbar, daß der Mitnehmer asymmetrisch an der Palette angreift.

Eine Weiterbildung hiervon schlägt gemäß Anspruch 3 vor, daß ein Magnet zum Halten des Mitnehmers vorgesehen ist. Der Magnet hat den Zweck, daß der Mitnehmer in seiner Startposition zum Fördern der Palette durch den Magneten gehalten wird. Dabei gibt es zum einen die Möglichkeit, daß der Mitnehmer auch während des Förderns der Palette durch den Magneten gehalten wird. Es gibt aber auch zum anderen die Möglichkeit, daß der Mitnehmer nur in der Startposition von dem Magneten gehalten wird. Mit Beginn des Förderns der Palette löst sich dann der Mitnehmer von dem Magneten und wird dann von ihm nicht mehr gehalten. Wichtig ist somit, daß in der Ausgangsstellung des Transportes der Mitnehmer in seiner Transportstellung durch den Magneten sicher gehalten wird. In der zuerst genannten Variante bedeutet es nicht, daß der Mitnehmer ausschließlich durch diesen Magneten in der Förderstellung gehalten ist. Hier dient insbesondere ein Anschlag zwischen dem beweglichen Mitnehmer und dem Verfahrgestell, welcher die beim Transport der Palette in den Mitnehmer eingeleitete Kraft aufnimmt. Die Verwendung eines Magneten hat den Zweck und den Vorteil, daß der Mitnehmer in seiner Ineingriffsposition für die Palette gehalten ist, ohne daß er sich zurückbewegen kann. Bei dem Magneten handelt es sich insbesondere um einen Permanentmagneten.

Die Weiterbildung gemäß Anspruch 4 schlägt vor, wie der Mitnehmer in die Außereingriffsstellung mit der Palette gebracht werden kann, wenn der Mitnehmer entgegen der eigentlichen Transportrichtung längs der Paletten verfahren werden soll und dabei die Palette an und für sich im Weg wäre. Indem der Mitnehmer entgegen seiner eigentlichen Förderrichtung längs der Rollenbahn zurückbewegt wird, trifft er auf die Palette. In dieser Position weicht der Mitnehmer selbstständig aus und bewegt sich in seiner Außereingriffsstellung, so daß er dann problemlos an der Palette vorbeifahren kann.

Gemäß der Weiterbildung in Anspruch 5 ist dabei der Mitnehmer bei seiner Verfahrbewegung entgegen seiner Förderrichtung beim Anstoßen gegen die Paletten unter Überwindung der Haltekraft des Magneten in seine untere Stellung verschwenkbar. Die Verwendung eines Magneten hat den Vorteil, daß kein komplizierter Halte- und Betätigungsmechanismus für den Mitnehmer vorgesehen ist, welcher steuerungsmäßig entsprechend ent- und verriegelt werden muß. Der Magnet wirkt einzig und allein durch seine Anziehungskraft und ist daher unkompliziert in seiner Betätigung. Die Magnetkraft muß dabei nur so groß sein, daß der Mitnehmer sicher in seiner oberen Position gehalten wird. Das Überwinden dieser Haltekraft erfolgt dadurch, daß der Mitnehmer gegen die Palette anstößt, so daß der Mitnehmer selbständig nach unten schwenken kann.

In einer ersten Variante gemäß Anspruch 6 ist der Mitnehmer auf einem verfahrbaren Wagen angeordnet. Dies bedeutet, daß ein Fahrgestell mit Rollen vorgesehen ist, welches auf Schienen verfahrbar ist. Der Wagen besitzt dabei als Antrieb einen Elektromotor. Dies stellt eine technisch einfache Möglichkeit dar, um den Mitnehmer längs der Rollenbahn verfahren zu können. Diese Variante ist insbesondere für leere Paletten gedacht.

Insbesondere für volle Paletten sieht die Weiterbildung gemäß Anspruch 7 vor, daß der Mitnehmer an einem endlos umlaufenden Kettenantrieb oder dgl. angeordnet ist. Dies hat den Vorteil, daß zwischen diesem Kettenantrieb und dem Mitnehmer eine feste Verbindung besteht, welche es erlaubt, daß auch volle, schwere Paletten bewegt werden können.

Zwei Ausführungsbeispiele einer erfindungsgemäßen Vorrichtung zum Fördern von Paletten werden nachfolgend anhand der Zeichnungen beschrieben. In diesen zeigt:
- Fig. 1: eine perspektivische Ansicht einer ersten Ausführungsvariante der Fördervorrichtung, bei welcher der Mitnehmer an einem verfahrbaren Wagen angeordnet ist;

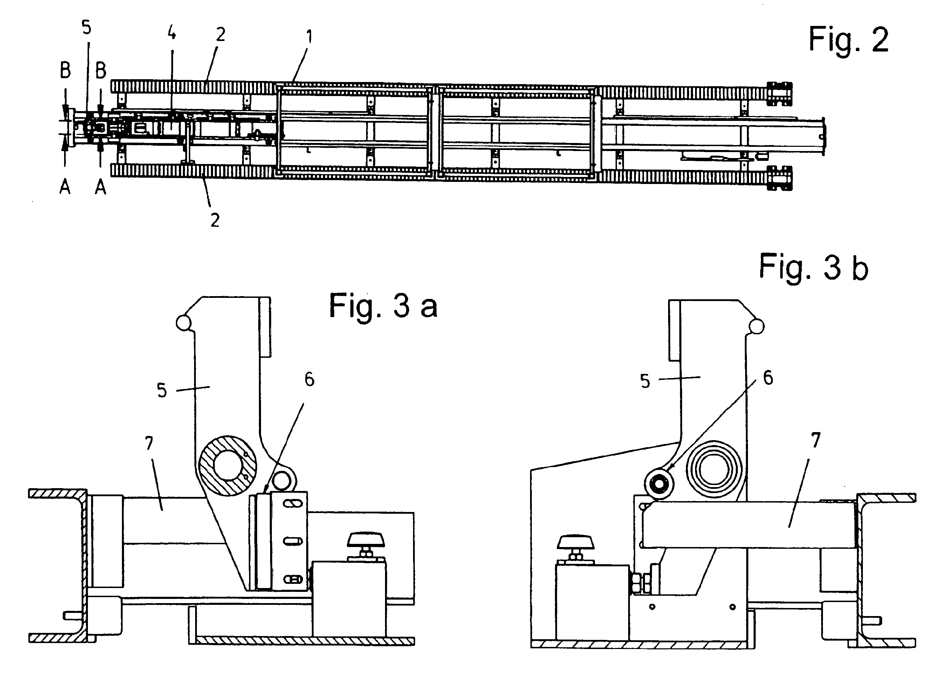

- Fig. 2: eine Draufsicht auf die Förderstrecke der Fig. 1;
- Fig. 3a: einen Schnitt entlang der Linie A-A in Fig. 2;
- Fig. 3b: einen Schnitt entlang der Linie B-B in Fig. 2;

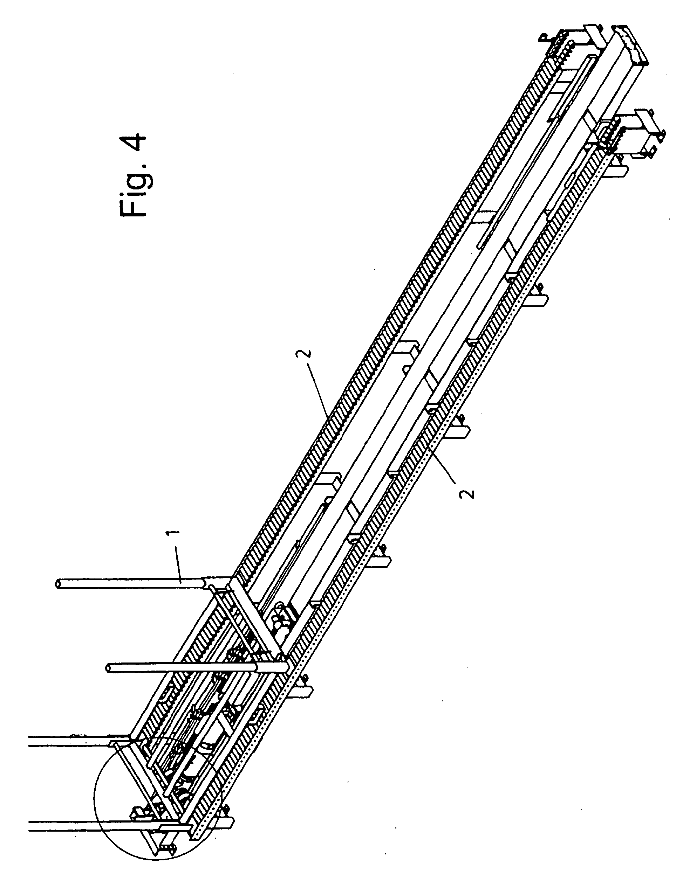

- Fig. 4: ein Detailausschnitt der Fördervorrichtung in Fig. 1;
- Fig. 5a: ein Detailausschnitt aus der Darstellung in Fig. 4;
- Fig. 5b: ein weiterer Detailausschnitt der Darstellung in Fig. 4;
- Fig. 6: eine perspektivische Ansicht einer zweiten Ausführungsvariante der Fördervorrichtung, bei welcher der Mitnehmer an einem endlos umlaufenden Kettenantrieb angeordnet ist;
- Fig. 7: ein Detailausschnitt der Fördervorrichtung in Fig. 6;
- Fig. 8a: eine Draufsicht auf die Fördervorrichtung in Fig. 7;
- Fig. 8b: einen Schnitt entlang der Linie A-A in Fig. 8a;
- Fig. 9a: ein Detailausschnitt der Darstellung in Fig. 8b;
- Fig. 9b: eine Draufsicht auf die Darstellung in Fig. 9a.

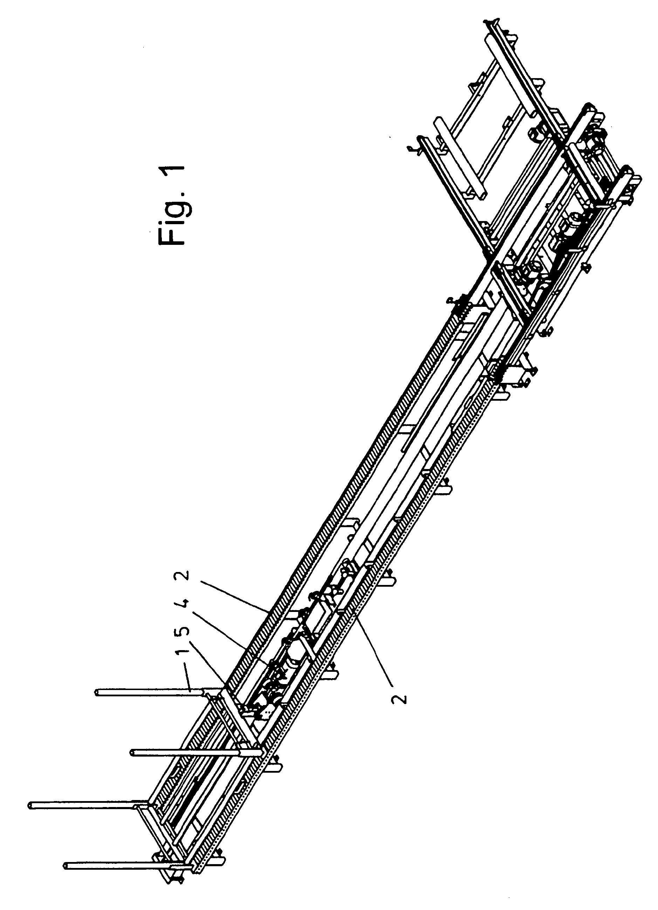

Fig. 1 zeigt eine Fördervorrichtung für Paletten 1 bestehend aus einer zweispurigen Rollenbahn 2, deren Rollen 3 frei drehbar sind.

Zwischen diesen beiden Rollenbahnen 2 ist ein Wagen 4 mit Rädern auf Schienen längsverfahrbar angeordnet. Der Wagen 4 besitzt dabei als antrieb einen Elektromotor. Weiterhin besitzt der Wagen 4 einen Mitnehmer 5. Dieser ist als verschwenkbarer Hebel mit einer horizontalen Drehachse ausgebildet und kann horizontal nach unten sowie vertikal nach oben verschwenkt werden. In der vertikalen Position wird er in dieser Stellung durch einen Magneten 6 in Form eines Permanentmagneten gehalten.

Die Funktionsweise ist wie folgt:
Fig. 1 zeigt die Ausgangssituation, in welcher die Palette 1 - in der Zeichnung - von links nach rechts verschoben werden soll. Der Wagen 4 mit seinem Mitnehmer 5 befindet sich dabei noch rechts der Palette 1. In dieser senkrechten Position wird der Mitnehmer 5 durch den Magneten 6 gehalten, damit er nicht in die horizontale Stellung nach unten kippt.

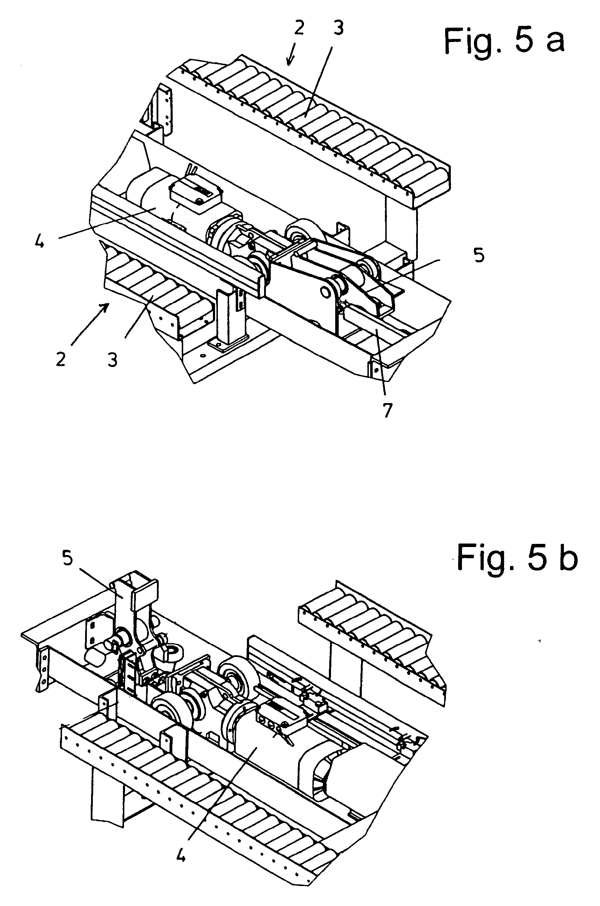

Um die Palette 1 in Fig. 1 nach rechts verfahren zu können, muß zunächst der Wagen 4 mit seinem Mitnehmer 5 auf die linke Seite der Palette 1 übergeführt werden. Zu diesem Zweck wird in der Zeichnung der Wagen 4 mit seinem Mitnehmer 5 nach links verfahren. Der Mitnehmer 5 stößt dabei gegen die Palette 1 an und wird dabei durch Überwinden der Kraft des Magneten 6 in die Horizontale verschwenkt. Dies bedeutet, daß der Wagen 4 mit seinem Mitnehmer 5 eine geringere Höhe aufweist. Dies bedeutet weiterin, daß der Wagen 4 mit seinem Mitnehmer 5 in der Zeichnung nach links unter der Palette 1 hindurch bis ganz nach links verfahren werden kann. Diese Situation ist in Fig. 5 dargestellt.

Beim Erreichen des Endes der Rollenbahn 2 trifft der Mitnehmer 5 des Wagens 4 an ein feststehendes Anschlagelement 7. Dies bewirkt, daß der Mitnehmer 5 aus seiner horizontalen Stellung senkrecht nach oben verschwenkt wird (Fig. 5b). In dieser Position wird der Mitnehmer 5 - wieder - durch den Magneten 6 gehalten. Außerdem wird ein weiteres Drehen durch einen Anschlag zwischen dem Mitnehmer 5 und dem Wagen 4 verhindert, so daß der Mitnehmer 5 seine senkrechte Position beibehält.

Anschließend wird der Wagen 4 mit seinem vertikalen Mitnehmer 5 in der Zeichnung nach rechts bewegt. Er stößt dabei an der Rückseite der Palette 1 an und nimmt dadurch die gesamte Palette 1 auf der Rollenbahn 2 mit, bis eine vorgegebene Endposition erreicht ist.

Von dort aus kann der Wagen 4 mit seinem Mitnehmer 5 wieder in die Ausgangsposition zurückbewegt und eine weitere Palette 1 gefördert werden.

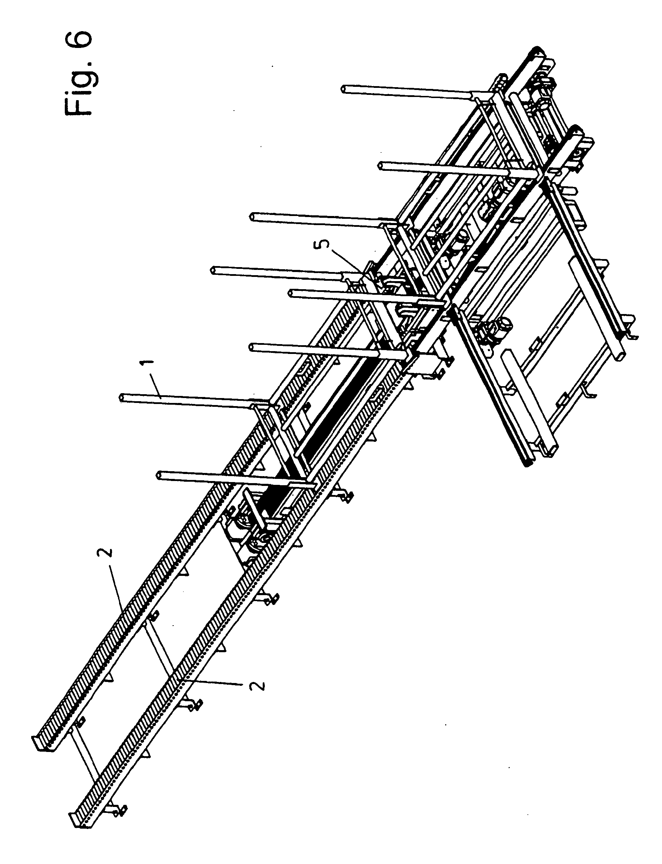

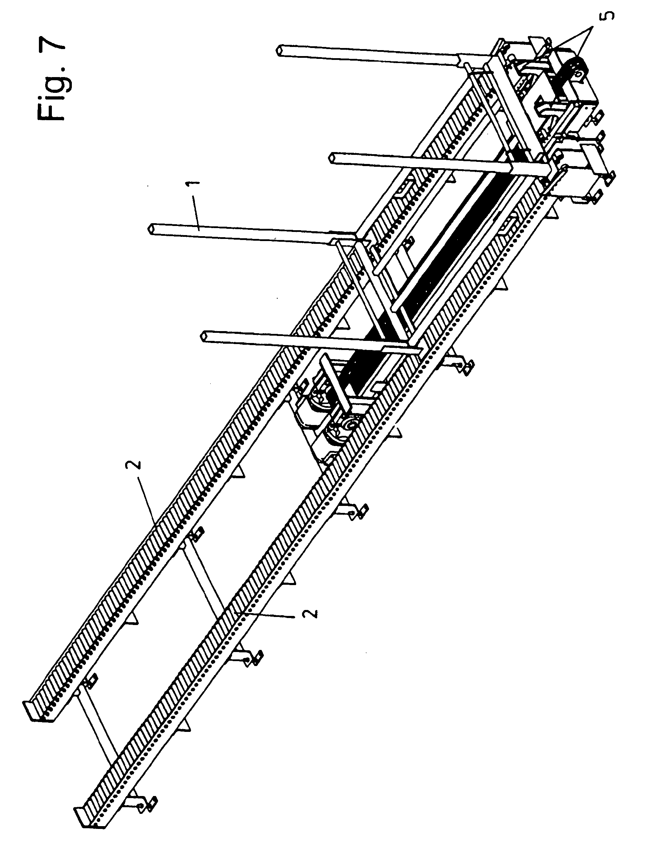

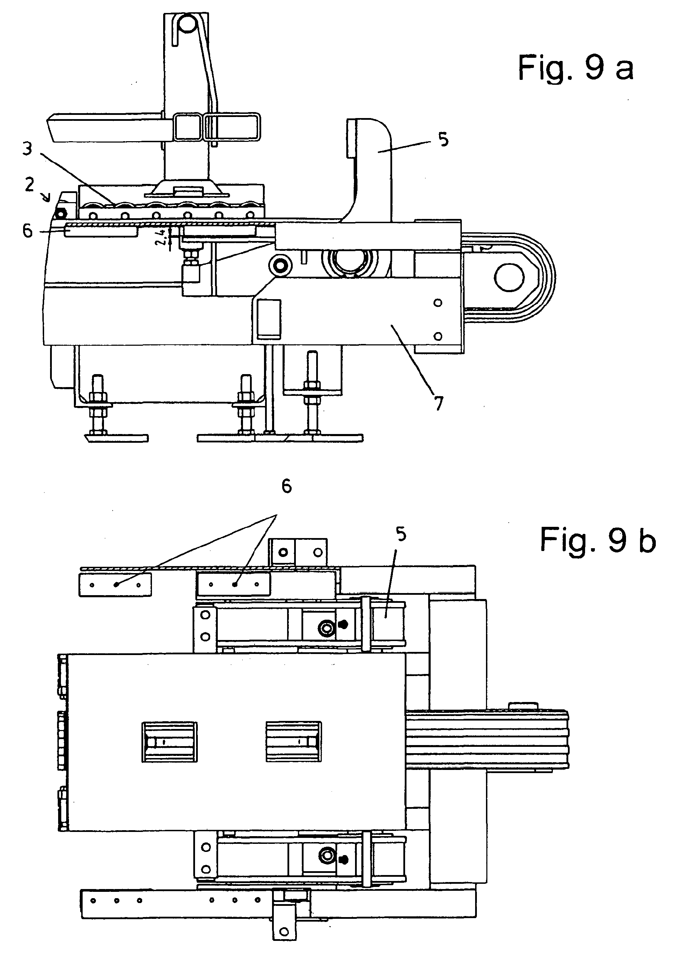

Die zweite Ausführungsform in den Fig. 6 bis 9 unterscheidet sich vom reinen Grundprinzip her nicht von der ersten Ausführungsform.

Der Unterschied besteht zum einen darin, daß statt eines Wagens 4 mit Rollen, welcher auf Schienen verfährt, für den Mitnehmer 5 ein endlos umlaufender Kettenantrieb 8 oder dgl. vorgesehen ist. Indem dieser endlos umlaufende Kettenantrieb 8 fest mit dem Gestell der Fördereinrichtung verbunden ist, kann die Mitnehmereinrichtung mit seinem Mitnehmer 5 hohe Kräfte auf die zu fördernde Palette 1 ausüben, so daß diese auch schwer sein kann. Alternativ zum Kettenantrieb 8 kann auch ein Linearantrieb oder dgl. vorgesehen sein, welcher an dem Anlagengestell befestigt ist und somit auftretende Förderkräfte in dieses Gestell ableitet.

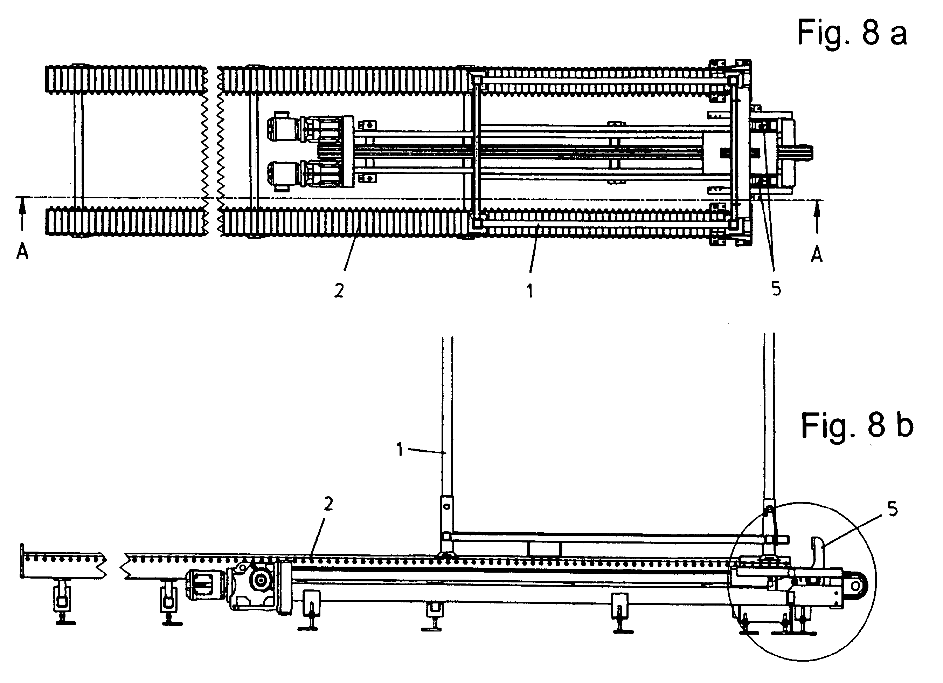

Der Unterschied besteht zum anderen in der Ausgestaltung des Mitnehmers 5. Das Grundprinzip des Mitnehmers 5 als solches ist jedoch das gleiche wie bei der ersten Ausführungsform, d. h. der Mitnehmer 5 in Form eines Zwillings-Mitnehmers befindet sich in der Ineingriffsposition mit der Palette 1 in einer vertikalen Stellung. Konkret besteht der Unterschied darin, daß der Mitnehmer 5 selbständig nach unten in die Horizontale klappt, wenn die Förderung der jeweiligen Palette 1 beendet ist und der Mitnehmer 5 von der Palette 1 frei ist, d. h. nicht mehr an der Palette 1 anliegt. In dieser heruntergeklappten Position des Mitnehmers 5 kann dieser dann unter einen neuen Palette 1 hindurch zurückbewegt werden. Am Ende befindet sich dann wieder ein Anschlagelement 7, welches den Mitnehmer 5 von der horizontalen Position in die vertikale Position überführt. In dieser vertikalen Position, wie sie in Fig. 8b dargestellt ist, wird dann der Mitnehmer 5 von dem Magneten 6 gehalten. Dadurch wird verhindert, daß der Mitnehmer 5 in die Horizontale herunterklappt.

Sobald die Förderung der Palette 1 durch Vorwärtsbewegen des Mitnehmers 5 beginnt, gelangt der Mitnehmer 5 außerhalb des Wirkungsbereichs des Magneten 6. Da aber der Mitnehmer 5 sich in der Anlage an der Palette 1 befindet, besteht nicht die Gefahr, daß er herunterklappt.

### Bezugszeichenliste

- 1: Palette
- 2: Rollenbahn
- 3: Rolle
- 4: Wagen
- 5: Mitnehmer
- 6: Magnet
- 7: Anschlagelement
- 8: Kettenantrieb

## Patentansprüche

1. Vorrichtung zum Fördern von Paletten (1) längs einer Förderstrecke,
mit einer Rollenbahn (2) mit frei drehbaren Rollen (3), auf welcher die Paletten (1) verfahrbar aufliegen, sowie
mit einem parallel zu der Rollenbahn (2) längsverfahrbaren, separaten Mitnehmer (5) als Antrieb zum Verfahren der Paletten (1) auf der Rollenbahn (2),
wobei der Mitnehmer (5) ein in eine obere Förderstellung sowie in eine untere Außereingriffsstellung verschwenkbarer Arm ist,
wobei der Mitnehmer (5) in die untere Außereingriffsstellung überführbar ist, in welcher er nicht in Fördereingriff mit der Palette (1) steht und in dieser Stellung unterhalb der Palette (1) längsverfahrbar ist und
wobei der in die Außereingriffsstellung nach unten verschwenkte Mitnehmer (5) bei Erreichen der endseitigen Startposition der Förderstrecke durch Anschlag an ein Anschlagelement (7) nach oben in die Fördereingriffsstellung für die Paletten (1) verschwenkbar ist,
**dadurch gekennzeichnet,**
**daß** zum Fördern der Paletten (1) über die gesamte Länge der Rollenbahn (2) ein einziger Mitnehmer (5) vorgesehen ist und
**daß** das Anschlagelement (7) am Ende der Rollenbahn (2) feststehend angeordnet ist.

2. Vorrichtung nach dem vorhergehenden Anspruch,
**dadurch gekennzeichnet,**
**daß** zwei zueinander parallele Rollenbahnen (2) vorgesehen sind und
**daß** der Mitnehmer (5) für die Paletten (1) zwischen den beiden Rollenbahnen (2) längsverfahrbar ist.

3. Vorrichtung nach einem der vorhergehenden Ansprüche,
**dadurch gekennzeichnet,**
**daß** zum Halten des Mitnehmers (5) in der Fördereingriffsstellung ein Magnet (6) vorgesehen ist.

4. Vorrichtung nach einem der vorhergehenden Ansprüche,
**dadurch gekennzeichnet,**
**daß** bei einer Verfahrbewegung des Mitnehmers (5) entgegen seiner vorgesehenen Förderrichtung für die Paletten (1) dieser Mitnehmer (5) dann selbständig in seine Außereingriffsstellung bewegbar ist, wenn er unterhalb der Paletten (1) verfahren werden soll und dabei zunächst gegen die Paletten (1) anstößt.

5. Vorrichtung nach den Ansprüchen 3 und 4,
**dadurch gekennzeichnet,**
**daß** der Mitnehmer (5) bei seiner Verfahrbewegung entgegen seiner Förderrichtung beim Anstoßen gegen die Paletten (1) unter Überwindung der Haltekraft des Magneten (6) in seine untere Stellung verschwenkbar ist.

6. Vorrichtung nach einem der Ansprüche 1 bis 5,
**dadurch gekennzeichnet,**
**daß** der Mitnehmer (5) auf einem verfahrbaren Wagen (4) angeordnet ist.

7. Vorrichtung nach einem der Ansprüche 1 bis 5,
**dadurch gekennzeichnet,**
**daß** der Mitnehmer (5) an einem anlagefesten Kettenantrieb (8) oder an einer Linearantriebseinrichtung angeordnet ist.

## Claims

1. Device for transporting pallets (1) along a transport line,
with a roller track (2) with freely rotatable rollers (3) on which the pallets lie in a movable manner, and
with a separate carrier (5) which can move longitudinally parallel to the roller track (2) as a drive to move the pallets (1) on the roller track (2),
wherein the carrier (5) is an arm which can be swivelled into an upper transport position and a lower disengagement position,
wherein the carrier (5) can be passed over when it is in the lower disengagement position in which it is not in transport engagement with the pallet (1), and in this position it can move longitudinally below the pallet (1), and
wherein when the carrier (5) is pivoted down into the disengagement position, on reaching the end-side starting position of the transport line, by stopping on a stop element (7), the carrier (5) can be swivelled up into the transport engagement position for the pallets (1),
**characterized in that**
a single carrier (5) is provided to transport the pallets (1) over the entire length of the roller track (2), and
**in that** the stop element (7) is arranged fixedly at the end of the roller track (2).

2. Device according to the preceding claim, **characterized in that** two roller tracks (2) are provided parallel to each other and **in that** the carrier (5) for the pallets (1) can be moved longitudinally between the two roller tracks (2).

3. Device according to any of the preceding claims, **characterized in that** a magnet (6) is provided to hold the carrier (5) in the transport engagement position.

4. Device according to any of the preceding claims, **characterized in that** on a travel movement of the carrier (5) against its provided transport direction for the pallets (1), this carrier (5) can then be moved automatically into its disengagement position if it is to be moved below the pallets (1), whereby it first abuts against the pallets (1).

5. Device according to claims 3 and 4, **characterized in that** on its travel movement against its transport direction, when abutting against the pallets (1), the carrier (5) can be swivelled into its lower position by overcoming the retaining force of the magnet (6).

6. Device according to any of claims 1 to 5, **characterized in that** the carrier (5) is arranged on a movable carriage (4).

7. Device according to any of claims 1 to 5, **characterized in that** the carrier (5) is arranged on a chain drive (8) which is stationary in relation to the plant or on a linear drive device.

## Revendications

1. Dispositif de convoyage de palettes (1) le long d'un trajet de convoyage, comprenant
une piste (2) à rouleaux, munie de rouleaux (3) à rotation libre et sur laquelle les palettes (1) reposent avec faculté de déplacement,
ainsi qu'un organe d'entraînement (5) distinct, pouvant effectuer des déplacements longitudinaux parallèlement à ladite piste (2) à rouleaux, et remplissant la fonction d'un entraînement conçu pour déplacer lesdites palettes (1) sur ladite piste (2) à rouleaux,
ledit organe d'entraînement (5) étant un bras pouvant pivoter vers une position supérieure de convoyage, ainsi que vers une position inférieure neutralisant la prise,
sachant que ledit organe d'entraînement (5) peut être transféré à ladite position inférieure neutralisant la prise, dans laquelle il n'est pas en prise de convoyage avec la palette (1) et peut être déplacé, dans cette position, au-dessous de ladite palette (1) dans le sens longitudinal, et
sachant que, lorsqu'il atteint l'emplacement extrême de départ du trajet de convoyage, ledit organe d'entraînement (5), animé d'un pivotement vers le bas jusqu'à ladite position neutralisant la prise, peut pivoter vers le haut jusqu'à la position de venue en prise de convoyage desdites palettes (1), en venant en applique contre un élément de butée (7), **caractérisé par le fait**
**qu'**un unique organe d'entraînement (5) est prévu pour convoyer les palettes (1) sur toute la longueur de la piste (2) à rouleaux, et
**que** l'élément de butée (7) occupe une position fixe à l'extrémité de ladite piste (2) à rouleaux.

2. Dispositif selon la revendication précédente,
**caractérisé**
**par** la présence de deux pistes (2) à rouleaux, parallèles l'une à l'autre, et
par le fait que l'organe d'entraînement (5), dédié aux palettes (1), peut être déplacé longitudinalement entre les deux pistes (2) à rouleaux.

3. Dispositif selon l'une des revendications précédentes,
**caractérisé par le fait**
**qu'**un aimant (6) est prévu pour retenir l'organe d'entraînement (5) dans la position de venue en prise de convoyage.

4. Dispositif selon l'une des revendications précédentes,
**caractérisé par le fait**
**que**, lors d'un mouvement déplaçant l'organe d'entraînement (5) en sens inverse de sa direction prévue pour le convoyage des palettes (1), cet organe d'entraînement (5) peut ensuite être mû vers sa position neutralisant la prise, de manière autonome, lorsqu'il doit être déplacé au-dessous desdites palettes (1) et vient alors heurter lesdites palettes (1) dans un premier temps.

5. Dispositif selon les revendications 3 et 4,
**caractérisé par le fait**
**que**, lors de son mouvement le déplaçant en sens inverse de sa direction de convoyage, l'organe d'entraînement (5) peut pivoter jusqu'à sa position inférieure lorsqu'il vient heurter les palettes (1), en surmontant la force de retenue de l'aimant (6).

6. Dispositif selon l'une des revendications 1 à 5,
**caractérisé par le fait**
**que** l'organe d'entraînement (5) est implanté sur un chariot déplaçable (4).

7. Dispositif selon l'une des revendications 1 à 5,
**caractérisé par le fait**
**que** l'organe d'entraînement (5) est implanté sur un entraînement (8) par chaîne assujetti à l'installation, ou sur un système d'entraînement linéaire.
